# EUROPÄISCHE PATENTANMELDUNG

(11) **EP 0 960 772 A2**
(43) Veröffentlichungstag der Anmeldung: **01.12.1999**
(21) Anmeldenummer: 99109088.7
(22) Anmeldetag: 07.05.1999
(51) Int. Cl.: B60P 3/34

(54) **Wohnwagen**

(30) Priorität: 27.05.1998 DE 19823698
(71) Anmelder: Knaus GmbH Jandelsbrunn, 94118 Jandelsbrunn (DE)
(72) Erfinder: Cürten, Franz J., 89079 Ulm (DE)
(74) Vertreter: R.A. KUHNEN & P.A. WACKER

(57) **Zusammenfassung**

Die Erfindung schafft ein Straßenfahrzeug (1), insbesondere einen Wohnwagen, bei dem ein Oberteil (3) gegenüber einem Basisaufbau (2) um eine Drehachse (4) schwenkbar angeordnet ist. Dadurch läßt sich im zusammengeklappten Zustand eine Transportstellung verwirklichen, welche sich durch eine außerordentlich geringe Bauhöhe auszeichnet. Das Straßenfahrzeug (1) ist daher weniger anfällig für einen Seitenwinddruck und bietet zudem einen geringeren Widerstand gegenüber dem Fahrtwind, wodurch auch der Kraftstoffverbrauch reduziert ist. Durch Aufklappen des Oberteils (3) gegenüber dem Basisaufbau (2) können weitere Stellungen hergestellt werden, welche eine angenehme Nutzung des Innenraums des Straßenfahrzeugs (1) ermöglichen. Insbesondere läßt sich dadurch ein besonders großer Innenraum herstellen.

## Beschreibung

Die vorliegende Erfindung betrifft ein Straßenfahrzeug, insbesondere einen Wohnwagen, mit einem Basisaufbau und einem dazu relativ beweglichen Oberteil.

Wohnwägen, Reisemobile und ähnliches sind beliebte Fahrzeuge, um unabhängig Urlaub machen zu können. Diese Fahrzeuge müssen daher zum einen den Anforderungen im Straßenverkehr angepaßt sein und sollen andererseits einen möglichst guten Wohnkomfort bieten. So sollen die äußeren Abmessungen möglichst gering sein, um ein sicheres Führen derartiger Straßenfahrzeuge z.B. auch bei seitlichem Winddruck zu erlauben. Ferner sind geringe Außenabmessungen auch sinnvoll, um den Widerstand gegenüber dem Fahrtwind gering zu halten und so den Kraftstoffverbrauch zu begrenzen. Gleichzeitig soll das Fahrzeug jedoch einen möglichst großen Nutzraum im Inneren bieten. In der Regel wird dies durch geschickte Gestaltung sowohl der äußeren Form als auch der Anordnung der Einrichtungsgegenstände im Inneren mehr oder weniger gut erreicht.

Eine Bauweise mit variablem Innenraumvolumen ist aus der DE 42 24 221 A1 bekannt, welche einen Aufbau für Fahrzeuge, insbesondere einen Wohn-Aufbau zeigt. Diese Bauform besteht aus einem oberen und unteren Teil, wobei das obere Teil gegenüber dem unteren Teil in vertikaler Richtung absenkbar und anhebbar ist. Zudem können Wandelemente des unteren Teils aus- und eingeschoben werden, um den Innenraum weiter zu vergrößern.

Diese Bauweise ist jedoch sehr aufwendig und ohne spezielle Hilfseinrichtungen ist eine Umgestaltung dieses Aufbaus kaum möglich. Die als Hubelemente vorgesehenen Hydraulikzylinder erfordern zudem eine Druckmittelversorgung, welche oftmals nicht am Fahrzeug vorgesehen ist. Ferner müssen die Hydraulikzylinder exakt synchron gesteuert werden, um ein Verkanten des Oberteils und damit eine Beschädigung des Aufbaus zu verhindern. Dieser Wohn-Aufbau ist umständlich bedienbar und störanfällig. Daher hat diese Bauform einen sehr hohen Wartungs- und Instandhaltungsaufwand. Von weiterem Nachteil ist, daß die Umgestaltung des Fahrzeugs von einem Zustand in den anderen relativ zeitraubend ist und der Bedienungskomfort dadurch beeinträchtigt wird.

Es ist daher Aufgabe der vorliegenden Erfindung, ein Straßenfahrzeug, insbesondere einen Wohnwagen, bereitzustellen, das einfach und schnell von einer Fahr- in wenigstens eine Nutzstellung überführbar ist.

Diese Aufgabe wird erfindungsgemäß dadurch gelöst, daß das Oberteil des Straßenfahrzeugs schwenkbar mit dem Basisaufbau verbunden ist.

Von besonderem Vorteil ist hierbei, daß das erfindungsgemäße Straßenfahrzeug auf einer sehr einfachen Bauweise basiert. Dadurch ist sowohl der Konstruktions- als auch der Bedienungsaufwand sehr gering. In der Fahrstellung wird das Oberteil einfach in seine unterste Stellung auf den Basisaufbau abgeschwenkt. Dadurch ist eine außerordentlich geringe Bauhöhe realisierbar. Dies ist besonders vorteilhaft, wenn man die Seitenwindstabilität des Fahrzeugs betrachtet. Zudem ist ein geringer Fahrwindwiderstand erzielbar. Das erfindungsgemäße Straßenfahrzeug verursacht dadurch einen relativ geringen Kraftstoffverbrauch.

Von weiterem Vorteil ist, daß durch den erfindungsgemäßen Aufbau des Straßenfahrzeugs ohne besondere technische Hilfsmittel ein schnelles Überführen zwischen den verschiedenen Klappstellungen des Oberteils möglich ist. Das Hochschwenken des Oberteils kann zudem auf einfache Weise von einer einzelnen Person ausgeführt werden, da das Oberteil durch die Drehachse nur einen Freiheitsgrad aufweist. Daher läßt sich das Volumen des Innenraums des Straßenfahrzeugs auf bedienerfreundliche Weise schnell und zuverlässig in wesentlichem Maße vergrößern.

Dabei hat sich für den Fachmann überraschend ergeben, daß es gemäß der Erfindung doch möglich ist, das Oberteil mit den gewünschten Festigkeitseigenschaften auszubilden und dennoch mit einfachen Mitteln schwenkbar zu gestalten. Hierbei ist zu berücksichtigen, daß das Oberteil sowohl den mechanischen als auch den dynamischen Belastungen an einem derartigen Straßenfahrzeug standhalten muß und daher eine gewisse Starrheit und daraus resultierend ein gewisses Gewicht erforderlich ist. Dennoch wurde erfindungsgemäß erkannt, daß in dieser Hinsicht keine oder kaum Abstriche erforderlich sind, wenn das Oberteil schwenkbar zum Basisaufbau gestaltet ist.

Vorteilhaft ist es ferner, daß ein Schwenkvorgang einen wesentlich geringeren Steuerungsaufwand erfordert, wie dies beispielsweise bei einem Anheben gemäß dem Stand der Technik der Fall ist. Insbesondere müssen nicht mehrere separate Aktivierungseinrichtungen synchron aufeinander eingestellt werden. Daher erfordert das erfindungsgemäße Straßenfahrzeug nur einen relativ geringen Wartungs- und Instandhaltungsaufwand.

Vorteilhafte Weiterbildungen der vorliegenden Erfindung ergeben sich aus den Merkmalen der Unteransprüche.

Dadurch, daß das Oberteil um eine Drehachse schwenkbar ist, die in Fahrtrichtung vorne am Fahrzeug vorliegt, kann vermieden werden, daß sich der Fahrtwind im Oberteil fängt, wodurch Staudruckbelastungen entstehen würden, die im Extremfalle ein ungewolltes Aufklappen des Oberteils verursachen könnten. Hierbei ist von Bedeutung, daß die Drehachse auch als Verankerung für das Oberteil dient. Der verschwenkbare Bereich liegt bei dieser Anordnungsweise somit im Windschatten des Straßenfahrzeugs. Daher ist das Straßenfahrzeug noch sicherer gestaltbar.

Von weiterem Vorteil ist es, wenn die Drehachse im unteren Bereich des Basisaufbaus ausgebildet ist. Dadurch ergibt sich im aufgeklappten Zustand über die gesamte Länge des Oberteils eine relevante Vergrößerung des Innenraums des Straßenfahrzeugs. Insbesondere ist dadurch auch eine Vergrößerung der Innenhöhe an dem Ende des Fahrzeugs möglich, an dem der Drehpunkt angeordnet ist. Dadurch erhöht sich der Nutzeffekt des Straßenfahrzeugs weiter. Durch die unten angeordnete Drehachse für das Oberteil ergibt sich zudem der weitere Vorteil, daß eine relativ geringe Stirnhöhe des Straßenfahrzeugs realisierbar ist, was günstige aerodynamische Verhältnisse am Straßenfahrzeug erzielen läßt. Dadurch verringert sich der Widerstand gegenüber dem Fahrtwind weiter. Zudem läßt sich so eine geringe Gesamthöhe realisieren, wodurch eine Unterbringung des Straßenfahrzeugs in einer gewöhnlichen Garage möglich ist.

Wenn das Oberteil den Basisaufbau im wesentlichen über die gesamte Länge des Fahrzeugs übergreift, kann die Innenraumvergrößerung somit auch auf alle Bereiche im Inneren des Straßenfahrzeugs erzielt werden. Dadurch erhöht sich der Nutzeffekt weiter.

Vorteilhaft ist ferner, wenn das Oberteil Seiten- und/oder Stirnflächen des Basisaufbaus wenigstens teilweise übergreift. Dadurch kann das Oberteil auch im ausgeschwenkten Zustand einen wirksamen Schutz für das Fahrzeuginnere bieten. Somit läßt sich eine gute Abdeckung des Basisaufbaus und damit ein guter Schutz für die Inneneinrichtung erzielen.

Dadurch, daß das Oberteil im eingeschwenkten Zustand wenigstens ein zu öffnendes Teil, wie z. B. eine Tür, ein Fenster, eine Klappe, etc. übergreift, kann bei einem vorübergehenden Nichtgebrauch des Straßenfahrzeugs oder während der Nacht ein zuverlässiger Einbruchsschutz erzielt werden. Die Sicherheit des Straßenfahrzeugs erhöht sich dadurch weiter.

Wenn eine Eingangstür des Straßenfahrzeugs zweiteilig ausgebildet ist, wobei der untere Teil der Eingangstür auch im eingeschwenkten Zustand geöffnet werden kann, so ist im Bedarfsfalle dennoch jederzeit ein Zutritt in das Innere des Straßenfahrzeugs möglich, ohne daß hierzu das Oberteil aufgeschwenkt werden müßte. Dadurch erhöht sich der Bedienungskomfort weiter.

Wenn Einrichtungselemente, insbesondere ein Bett, im aufgeschwenkten Zustand des Oberteils verlängerbar, insbesondere teleskopier- oder aufklappbar gestaltet sind, kann der durch das Aufschwenken zusätzlich entstehende Raum im Fahrzeuginneren noch effektiver genutzt werden. Das Fahrzeug wird dadurch noch anwendungsfreundlicher.

Von weiterem Vorteil ist es, wenn im Inneren des Fahrzeugs in aufgeschwenktem Zustand wenigstens in Teilbereichen normale Stehhöhe vorliegt. Dadurch erhöht sich der Bedienungskomfort weiter.

Wenn die der Drehachse gegenüberliegende Wand des Basisaufbaus und die der Drehachse gegenüberliegende Wand des Oberteils Radien zur Drehachse bilden, können diese beim Aufschwenken exakt übereinander geführt werden, ohne daß hierbei ein größer werdender Spalt zwischen dem Basisaufbau und dem Oberteil entsteht. Dadurch kann ein unbefugter Zugang in das Fahrzeuginnere auch in der Nutzstellung noch besser vermieden werden. Weiter ergibt sich hieraus ein harmonischeres Erscheinungsbild des Straßenfahrzeugs sowohl in eingeschwenktem als auch in aufgeschwenktem Zustand.

Dadurch, daß vorzugsweise am Basisaufbau befestigte Führungseinrichtungen zum Führen der Bewegung des Oberteils um die Drehachse vorgesehen sind, kann das Aufschwenken bzw. Einschwenken exakt ausgeführt werden. Insbesondere kann jedoch ein Verwinden des Oberteils während der Schwenkbewegung zuverlässig vermieden werden. Die Führungseinrichtungen sind dabei deshalb vorzugsweise am Basisaufbau befestigt, um eventuelle Abnützungsspuren von den Führungseinrichtungen nicht auf von außen sichtbaren Flächen entstehen zu lassen. Die Elemente der Führungseinrichtungen gleiten oder rollen dann auf der Innenseite des Oberteils ab.

Hierbei ist es von Vorteil, wenn die Führungseinrichtungen als Führungselemente Rollen, Kugeln oder Gleilsteine aufweisen. Mit derartigen Führungselementen lassen sich exakte und insbesondere auch leichtgängige Bewegungen ermöglichen. Daher kann das Auf- und Einschwenken des Oberteils ohne größeren Kraftaufwand durchgeführt werden. Dies erhöht die Bedienungsfreundlichkeit weiter.

Wenn die Führungseinrichtungen zudem federnd gelagert sind, können mit einfachen Mitteln Fertigungstoleranzen ausgeglichen werden. Dadurch können unerwünschte Streuungen des Schwenkverhaltens von einem Fahrzeug zum anderen vermieden werden.

Dadurch, daß die gefederte Lagerung der Führungseinrichtungen in ihrer Federkraft einstellbar ist, läßt sich die zum Schwenken des Oberteils erforderliche Kraft auf einfache Weise anpassen. Dies erhöht den Bedienungskomfort weiter.

Von weiterem Vorteil ist es, wenn die Führungselemente der Führungseinrichtungen an den Ecken der Seitenwände in einem gemeinsamen Gehäuse zusammengefaßt sind, wobei die Längsachsen der Führungselemente dann vorzugsweise einen Winkel bilden, der 90° oder größer als 90° ist. Dadurch können die Führungseinrichtungen gerade an den relativ kritischen Stellen im Eckbereich eine gut geführte Beweglichkeit herstellen. Die Führungselemente können zudem aufeinander abgestimmt werden, wobei sich der konstruktive Aufwand für die Führungseinrichtungen durch die Zusammenfassung in jeweils einem gemeinsamen Gehäuse wesentlich vereinfacht.

Dadurch, daß das Oberteil und/oder der Basisaufbau aus einem starren Material, insbesondere einem faserverstärkten Kunststoff ausgebildet ist, können bei geringen Materialgewichten sehr gute Festigkeitseigenschaften verwirklicht werden. Dies ist insbesondere für das Oberteil von Bedeutung, da sich durch das geringe Gewicht auch die zum Schwenken erforderliche Kraft in einem relativ niedrigen Bereich befindet. Weiter ergibt sich durch das starre Material auch eine große Verwindungssteifigkeit. Daher läßt sich der Schwenkvorgang noch einfacher und besser ausführen.

Wenn das Oberteil und/oder der Basisaufbau in Sandwich-Bauweise mit einer innen liegenden Isolierung ausgebildet ist, läßt sich zudem auch eine Tauglichkeit des Straßenfahrzeugs z. B. für Wintercamping erzielen.

Von weiterem Vorteil ist es, wenn das Oberteil und der Basisaufbau gegeneinander mittels einer Bürstendichtung abgedichtet sind, welche vorzugsweise am Basisaufbau befestigt ist. Durch eine Bürstendichtung wird eine gute, aber dennoch luftdurchlässige Abdichtung zwischen dem Oberteil und dem Basisaufbau ermöglicht. Dadurch läßt sich ein günstiges Raumklima im Inneren des Straßenfahrzeugs realisieren.

Vorteilhaft ist ferner, wenn das Oberteil und der Basisaufbau gegeneinander mittels eines aufpumpbaren, umlaufenden Luftschlauches abgedichtet sind. Dadurch läßt sich eine gänzlich dichte Abdichtung zwischen den zueinander verschwenkbaren Teilen herstellen. Hierbei ist weiter von Vorteil, daß diese Abdichtung in einer beliebigen Schwenkstellung durch einfaches Aufpumpen des Luftschlauches herstellbar ist. Mit dieser Dichtung ergibt sich zudem auch eine Fixierung des Oberteils am Basisaufbau. Weiter läßt sich somit auch die Wintertauglichkeit des Straßenfahrzeugs erhöhen, da das Raumklima im Inneren des Fahrzeugs von der Außenwelt abgekoppelt ist.

Wenn der Luftschlauch in einer an der umlaufenden Oberkante des Basisaufbaus oder an der umlaufenden Unterkante des Oberteils angebrachten Profilleiste eingefügt ist, welche so geöffnet ist, daß bei einem Aufpumpen des Luftschlauches dessen Wulst im wesentlichen im rechten Winkel zu den Seitenwänden bzw. der der Drehachse gegenüberliegenden Wand austritt, läßt sich das Verhalten des Luftschlauches beim Aufpumpen gut steuern. Zudem ist dadurch auch die Lage des Luftschlauches exakt vorgegeben, wodurch eine gezielte Abdichtung in einer gewünschten Schwenkstellung herstellbar ist.

Wenn der Luftschlauch mittels elastischer Bänder am Basisaufbau bzw. am Oberteil festgelegt ist, kann eine zuverlässige und dennoch flexible Befestigung des Luftschlauches erzielt werden. Dadurch können sich Ungleichmäßigkeiten an den Oberflächen des Basisaufbaus bzw. am Oberteil ausgleichen, wodurch sich die Dichtwirkung noch weiter verbessern läßt.

Dadurch, daß der Luftschlauch alternativ in der Profilleiste umlaufend oder punktuell eingeklebt ist, läßt sich mit einfachen Mitteln wirksam ein Herausfallen des Luftschlauches vermeiden.

Von Vorteil ist weiter, wenn der Luftschlauch an der der Austrittsöffnung gegenüberliegenden Seite ein Profil aufweist, das punktuell oder umlaufend in eine in der Profilleiste befindliche Nut einklemmbar ist. Dadurch wird auch eine formschlüssige Festlegung des Luftschlauches erzielt, wodurch eine Beschädigung des Luftschlauches z. B. beim Verschwenken des Oberteils an der Oberkante des Basisaufbaus noch wirksamer vermieden werden kann, da der Luftschlauch zuverlässig in der Profilleiste gehalten wird und nicht oder nur geringfügig davon übersteht.

Wenn das Oberteil in mehreren Öffnungsstellungen, vorzugsweise drei, gegenüber dem Basisaufbau arretierbar ist, können somit die hauptsächlich genutzten Schwenkstellungen zuverlässig festgestellt werden. Dadurch läßt sich ein unerwünschtes Abklappen des Oberteils mit der damit verbundenen Gefahr für Personen im Innenraum oder an Fenster- oder Türöffnungen wirksam verhindern. Die Sicherheit des Straßenfahrzeugs erhöht sich dadurch weiter. Zudem erhöhen sich durch die verschiedenen Klappstellungen auch die Gestaltungsfreiheiten für den Anwender.

Indem das Oberteil über die obere Abschlußkante des Basisaufbaus hinausgeschwenkt werden kann, ergibt sich eine Art Sommerstellung, welche einen Spalt zwischen dem Oberteil und dem Basisaufbau zuläßt. Durch diesen Spalt ist dann ohne weiteres ein Luftaustausch mit der Umgebung möglich. Dadurch erhöht sich der Wohnkomfort im Fahrzeug weiter.

Wenn zudem ein Moskitonetz zum Schließen der beim Aufschwenken des Oberteils über die obere Abschlußkante des Basisaufbaus hinaus entstehenden Öffnung vorgesehen ist, kann gleichzeitig der Zutritt von Insekten wirksam vermieden werden.

Hierbei ist weiter von Vorteil, wenn das Moskitonetz zwischen dem Basisaufbau und dem Oberteil eingeknöpft ist. Dann kann dieses auf einfache und zuverlässige Weise angefügt und abgenommen werden.

Wenn das Moskitonetz in eine umlaufende Kederleiste am Basisaufbau und/oder eine umlaufende Kederleiste am Oberteil einfügbar ist, wird eine noch zuverlässigere Abschottung gegenüber Insekten erzielt.

Dadurch, daß das Moskitonetz einstückig ist und in etwa in der Mitte zwischen den Befestigungspunkten am Basisaufbau und Oberteil ein Gummiband angefügt ist, welches das Moskitonetz derart elastisch vorspannt, daß es in abgesenktem Zustand nach innen gezogen ist, kann wirksam vermieden werden, daß das Moskitonetz zwischen dem Oberteil und dem Basisaufbau eingeklemmt wird. Eine Beschädigung oder Zerstörung des Moskitonetzes während des Schwenkvorgangs kann somit wirksam vermieden werden.

Von Vorteil ist es weiter, wenn auf der Oberseite des Oberteils ein Dachaufbau in Form eines kieloben auf dem Fahrzeugdach angeordneten Bootskörpers mit Ruderdollen und/oder einer Segelmasthalterung und/oder einem Außenbordmotorspiegel vorgesehen ist. Damit ist es zum einen möglich, zusätzlichen Stauraum auf dem Straßenfahrzeug herzustellen und ferner kann dieser Dachaufbau auch als Boot beim Camping an einem See oder am Meer genutzt werden. Diese Aspekte sind insbesondere auch Gegenstand der parallelen deutschen Patentanmeldung mit dem Titel "Straßenfahrzeug" und dem Anwaltsaktenzeichen 11KN6102. Hinsichtlich der besonderen Aspekte und Vorteile durch diese Bauweise wird vollinhaltlich auf deren Anmeldeunterlagen Bezug genommen.

Die Erfindung wird nachfolgend in Ausführungsbeispielen anhand der Figuren der Zeichnung näher erläutert. Es zeigt:
- Fig. 1: einen erfindungsgemäßen Wohnwagen in Transportstellung;
- Fig. 2: den erfindungsgemäßen Wohnwagen gemäß Fig. 1 in einer Nutzstellung;
- Fig. 3: eine abgewandelte Ausführungsform des erfindungsgemäßen Wohnwagens in einer noch weiter aufgeklappten Stellung des Oberteils;
- Fig. 4: eine Detailansicht mit dem im Spalt zwischen dem Oberteil und dem Basisaufbau vorliegenden Netz;
- Fig. 5: ein weiteres Detail mit einer Bürstendichtung;
- Fig. 6: noch ein weiteres Detail mit einer Schlauchdichtung;
- Fig. 7: eine weitere Ausführungsform des erfindungsgemäßen Wohnwagens mit einem Bootskörper auf dem Dach; und
- Fig. 8: eine Heckansicht des Wohnwagens gemäß Fig. 7.

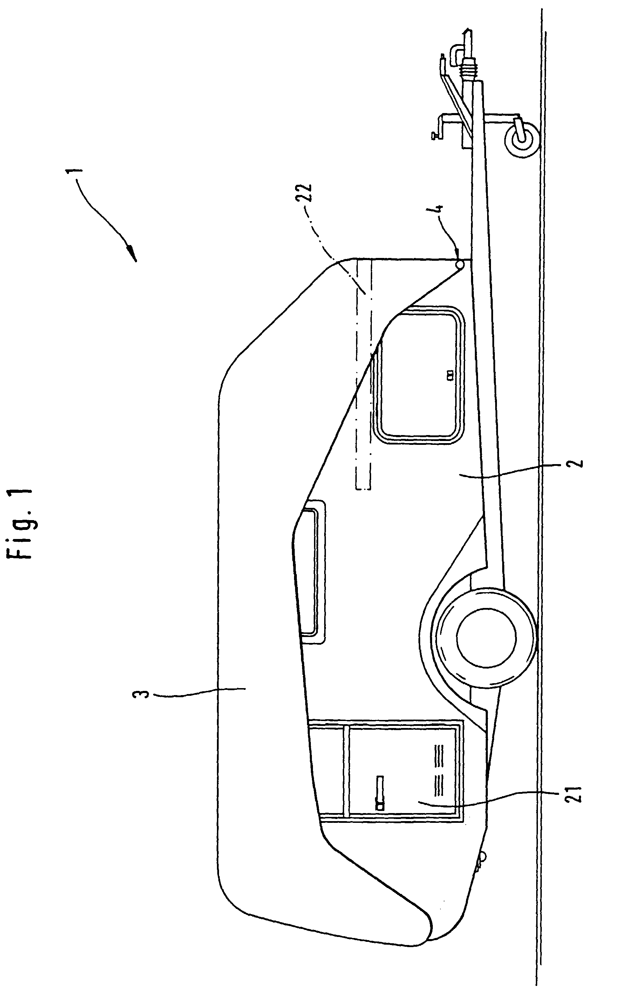

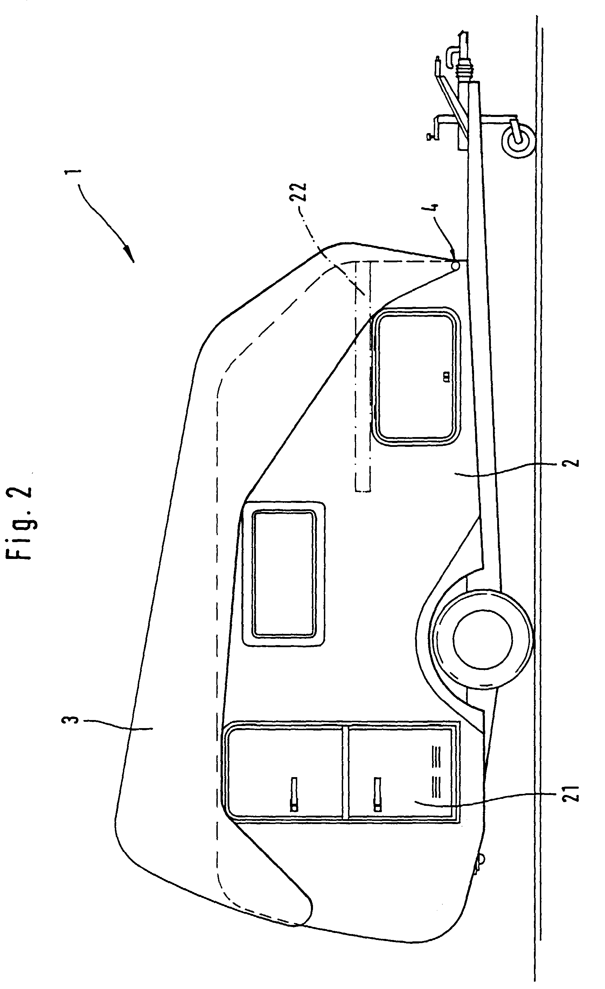

In den Figuren 1 und 2 ist eine erste Ausführungsform eines erfindungsgemäßen Straßenfahrzeugs in Gestalt eines Wohnwagens 1 dargestellt. Dieser Wohnwagen 1 weist einen Basisaufbau 2 und ein Oberteil 3 auf. Das Oberteil 3 ist mittels einer Drehachse 4 schwenkbar am Basisaufbau 2 angelenkt. In der vorliegenden Ausführungsform ist die Drehachse 4 in Fahrtrichtung vorne am Fahrzeug im unteren Bereich angeordnet.

Fig. 1 zeigt hierbei den eingeschwenkten Zustand des Oberteils, der einer Transportstellung entspricht. Diese Stellung kann auch bei Nichtgebrauch des Wohnwagens oder während der Nacht hergestellt sein. In diesem eingeschwenkten Zustand weist der Wohnwagen 1 eine relativ geringe Gesamthöhe von z. B. 1,90 m auf, wobei immer noch eine Innenraumhöhe von beispielsweise 1,50 m erzielbar ist.

Da das Oberteil 3 gemäß der Darstellung in Fig. 1 und 2 so ausgebildet ist, daß es nicht nur die gesamte Länge und Breite des Wohnwagens 1 übergreift, sondern auch seitlich und an der vorderen und hinteren Stirnseite über den Basisaufbau 2 herunter ragt, verdeckt das Oberteil 3 in dieser zusammengeklappten Stellung auch etwaige Klappen, Fenster, Türen, usw. am Wohnwagen 1. Dadurch ist der Wohnwagen 1 besser gegen Witterungseinflüsse geschützt und es wird zudem ein wirksamer Einbruchsschutz erreicht.

Um auch in dieser Stellung einen Zugang zum Wohnwagen 1 zu ermöglichen, weist der Basisaufbau 2 eine zweigeteilte Eingangstür 21 auf. Der untere Teil der Eingangstür 21 kann hierbei separat geöffnet und verschlossen werden.

Da das Oberteil 3 auch im Frontbereich des Fahrzeugs übergreifend über dem Basisaufbau 2 ausgebildet ist, ergibt sich zudem ein geringer Luftwiderstand gegenüber dem Fahrtwind, da diesem eine glatte Oberfläche dargeboten wird. Die Anbindung des Oberteils 3 an den Basisaufbau 2 erfolgt somit in einem Bereich, der im Windschatten des Zugfahrzeugs liegt. Daher treten im Frontbereich des Wohnwagens 1 kaum Luftstauungen auf. Weiter bietet der Wohnwagen 1 in zusammengeklapptem Zustand nur eine relativ geringe Angriffsfläche für Seitenwind, wodurch ein besseres Fahrverhalten erzielbar ist.

In Fig. 2 ist das Oberteil 3 des Wohnwagens 1 um einen vorbestimmten Winkel gegenüber dem Basisaufbau 2 aufgeschwenkt. In dieser Stellung ist eine Nutzung des Wohnwagens ohne Komforteinbußen möglich, da sich im Innenraum eine ausreichende Stehhöhe ergibt, die hier beispielsweise im hinteren Bereich ca. 2,15 m beträgt. Ferner sind die gesamte Eingangstür 21 und die Fenster und Klappen am Basisaufbau 2 nun frei zugänglich.

In dieser Wohnstellung können zudem auch Bestandteile der Inneneinrichtung in den beim Aufklappen entstehenden vergrößerten Innenraum erweitert werden. So kann z. B. ein in Fig. 2 strichpunktiert angedeutetes Bett 22 durch Ausklappen oder Teleskopieren vergrößert werden.

Da die Drehachse 4 in dieser Ausführungsform im unteren Bereich des Wohnwagens 1 angeordnet ist, ergibt sich eine Raumerweiterung, welche sich nicht nur auf den Deckenbereich des Wohnwagens 1 beschränkt, sondern auch den der Drehachse 4 benachbarten Seiten- und Stirnwandbereich betrifft.

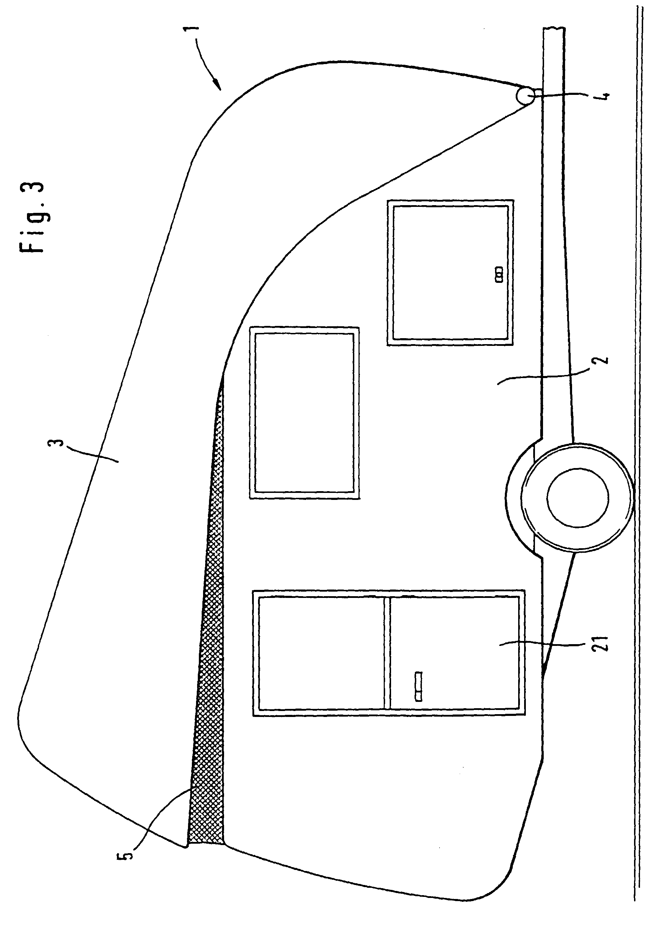

Während in Fig. 2 ein aufgeschwenkter Zustand dargestellt ist, bei dem das Oberteil 3 den Basisaufbau 2 gerade noch übergreift, stellt Fig. 3 bei einer etwas anderen Ausführungsform des Oberteils 3 eine weiter aufgeschwenkte Stellung dar. In dieser "Sommerstellung" ergibt sich ein offener Spalt zwischen dem Oberteil 3 und dem Basisaufbau 2. In der vorliegenden Ausführungsform wird dieser Spalt durch ein Netz, z. B. ein Moskitonetz, derart geschlossen, daß Insekten im wesentlichen der Zutritt verwehrt ist. Gleichzeitig erlaubt dieser Spalt jedoch auch einen Luftaustausch mit der Umgebung, was insbesondere im Sommer zu einem außerordentlich angenehmen Wohnklima im Wohnwagen 1 beitragen kann.

Wie Fig. 3 ferner verdeutlicht, kann die Gestalt und Form des Oberteils 3 u.a. an die jeweilige Gestalt des Basisaufbaus 2 und die Anordnungsweise der Türen, Fenster, Klappen, usw. angepaßt sein.

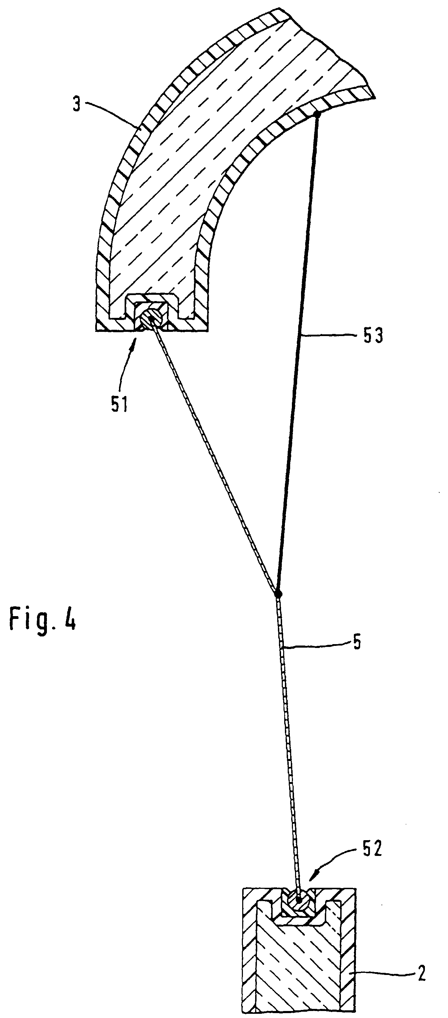

Gemäß der Darstellung in Fig. 4 ist das Netz 5 einerseits in einer Kederleiste 51 am Oberteil 3 und andererseits in einer Kederleiste 52 am Basisaufbau 2 eingefügt. Ferner ist etwa mittig am Netz 5 ein Gummizug 53 angeordnet, der das Netz 5 derart zum Innenraum des Wohnwagens 1 hin vorspannt, daß beim Herunterschwenken des Oberteils 2 wirksam vermieden wird, daß das Netz 5 zwischen dem Oberteil 3 und dem Basisaufbau 2 einklemmt. Dadurch wird ein Verklemmen des Oberteils 3 beim Herunterklappen und eine Beschädigung des Netzes 5 wirksam vermieden.

Wie aus den Fig. 1 bis 3 erkennbar ist, sind die der Drehachse 4 gegenüberliegenden Heckwände am Basisaufbau 2 und am Oberteil 3 in ihrer Gestalt so ausgebildet, daß sie Radien zur Drehachse 4 bilden. Dadurch ergibt sich sowohl an den Seitenwänden als auch an der Heckwand ein während dem Schwenkvorgang gleichbleibender Spalt zwischen der Innenseite des Oberteils 3 und der Außenseite des Basisaufbaus 2. Zur Führung dieser Bewegung ist im Eckbereich zwischen jeder Seitenwand und der Heckwand am Basisaufbau 2 eine Führungseinrichtung angeordnet, welche hier nicht näher im Detail dargestellt ist. Jede Führungseinrichtung enthält in etwa 90° zueinander stehende Rollen, die federnd gelagert sind und somit eine Vorspannung gegen die Innenwand des Oberteils 3 ausüben. Die Rollen wirken dabei auf die Seitenwände des Oberteils 3 und auf die Heckwand des Oberteils 3. Dadurch wird das Oberteil 3 in diesem Bereich zuverlässig geführt.

Um das Aufschwenken weiter erleichtern zu können, können zusätzliche Führungseinrichtungen vorgesehen sein. Weiter können auch Gasdruckfedern am Fahrzeug angeordnet sein, um den Kraftaufwand zum Aufschwenken zu verringern.

Das Oberteil 3 kann in vorbestimmten Schwenkstellungen oder stufenlos gegenüber dem Basisaufbau 2 verriegelt werden. Insbesondere ist eine einbruchssichere Verriegelung in vollständig eingeschwenktem Zustand, d. h. in der Transportstellung, vorgesehen.

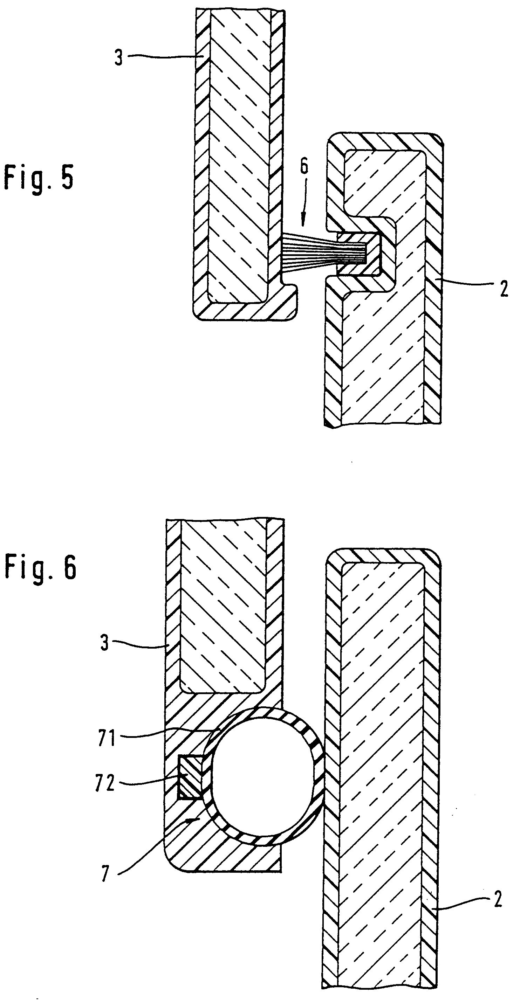

Zur Abdichtung des Basisaufbaus 2 gegenüber dem Oberteil 3 ist ferner eine Bürstendichtung 6 angeordnet, wie sie in Fig. 5 dargestellt ist. Die Bürstendichtung 6 ist hierbei im oberen Endbereich des Basisaufbaus 2 angeordnet. Dabei gleiten die Borsten an der Innenwand des Oberteils 3 ab und schaffen eine gute Abdichtung zwischen beiden Elementen, ohne einen Luftaustausch zwischen dem Innenraum des Wohnwagens 1 und der Umgebung gänzlich zu unterbinden. Eventuelle Schleifspuren durch die Borsten der Bürstendichtung 6 treten zudem an der von außen nicht sichtbaren Innenseite des Oberteils 3 auf.

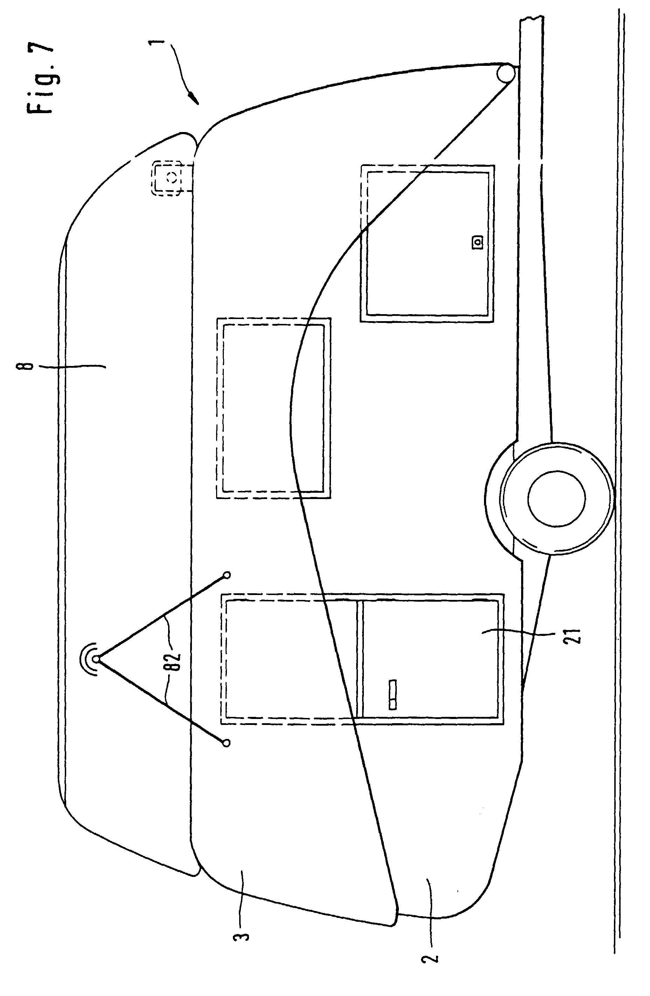

Gemäß der Darstellung in Fig. 6 kann ferner anstelle oder ergänzend zur Bürstendichtung 6 eine Schlauchdichtung 7 angeordnet sein. In der vorliegenden Ausführungsform ist die Schlauchdichtung 7 umlaufend am unteren Endbereich des Oberteils 3 angeordnet. Sie enthält einen z.B. mit Luft aufblasbaren Schlauch 71, der fest mit einem Fixierprofil 72 verbunden ist. Mittels dem Fixierprofil 72 ist die Schlauchdichtung 7 in einer Nut im Oberteil 3 festgelegt, wobei das Fixierprofil 72 nicht nur in die Nut eingeklemmt ist, sondern durch Kleben zusätzlich ein sicherer Halt erzielt wird.

Während eines Schwenkvorgangs ist der Schlauch 71 nicht gefüllt, so daß keine Behinderung der Schwenkbewegung auftritt. Nachdem die gewünschte Schwenkstellung eingestellt ist, kann der Schlauch 71 aufgepumpt werden, wodurch er sich gegen den Basisaufbau 2 drückt. Die Elastizität des Schlauches 71 ermöglicht dann eine hermetische Abdichtung des Oberteils 3 gegenüber dem Basisaufbau 2. Zudem stabilisiert der Anlagedruck des Schlauches 71 gegen den Basisaufbau 2 die Gesamtanordnung weiter.

Als Materialien für die Ausgestaltung des Oberteils 3 und des Basisaufbaus 2 werden faserverstärkte Kunststoffe verwendet. Diese weisen bei einem relativ geringen Gewicht eine gute Stabilität und Festigkeit auf. So läßt sich auch eine gute Schlagfestigkeit oder sogar eine Schußfestigkeit herstellen.

Zur Herstellung einer Wintertauglichkeit des Wohnwagens 1 sind das Oberteil 3 und der Basisaufbau 2 zudem in Sandwich-Bauweise ausgebildet, wobei innenliegend eine Isolierung aus einem geeigneten Material angeordnet ist.

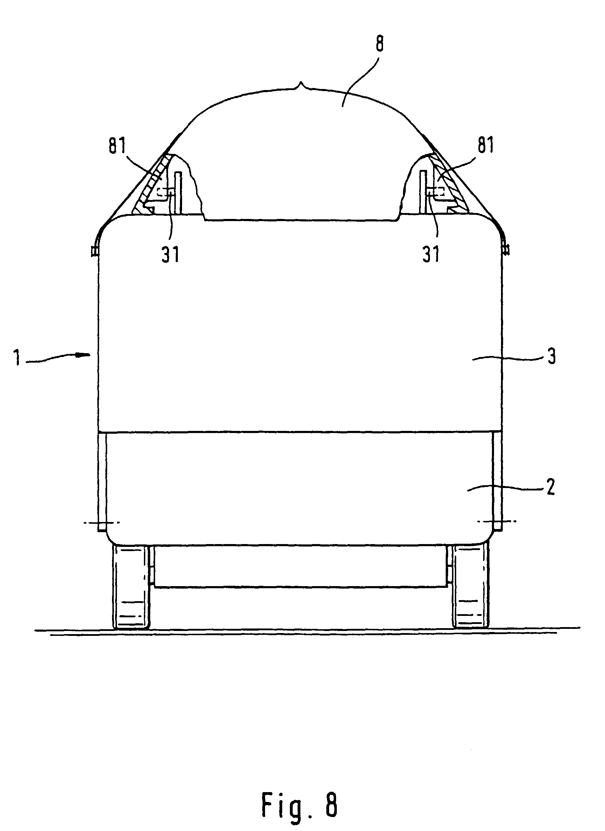

In den Fig. 7 und 8 ist eine Weiterbildung des erfindungsgemäßen Wohnwagens 1 dargestellt, bei der auf der Oberseite des Oberteils 3 ein zusätzlicher Dachaufbau in Gestalt eines kieloben auf dem Dach angeordneten Bootskörpers 8 angeordnet ist. Dieser Bootskörper 8 ist dabei mit Ruderdollen und/oder einer Segelmasthalterung und/oder einem Außenbordmotorspiegel versehen und kann bei einem Campingaufenthalt an einem See oder am Meer abgenommen und als zusätzliches Freizeitsportgerät verwendet werden.

Die Anordnung eines Bootskörpers 8 auf dem Dach eines Wohnwagens 1 stellt zudem auch einen eigenständigen Gedanken dar und ist Gegenstand der parallelen deutschen Patentanmeldung mit dem Titel "Straßenfahrzeug" und dem Anwaltsaktenzeichen 11KN6102. Auf den Inhalt der Anmeldeunterlagen dieser Patentanmeldung wird hiermit vollinhaltlich Bezug genommen.

Der Bootskörper 8 ist gemäß der Darstellung in den Fig. 7 und 8 so ausgebildet, daß er nicht über die äußeren Abmessungen des Wohnwagens 1 hinausragt. Weiter sind das Oberteil 3 und der Bootskörper 8 in ihrer Gestalt soweit aufeinander abgestimmt, oder mit Spoilern und ähnlichem versehen, daß kein oder kaum ein Winddruck im Inneren des Bootskörpers 8 auftritt, der sich nachteilig auf das Fahrverhalten auswirken würde. Der Bootskörper 8 ist mittels einer Haltereinrichtung 81 an einer Verankerung 31 am Oberteil 3 festgelegt. Die Verankerung 31 läßt dabei ein Verschwenken des Bootskörpers 8 zu. Die Verankerung 31 ist zudem in Fahrtrichtung vorne am Wohnwagen 1 angeordnet, um in diesem Bereich, der dem Fahrtwind ausgesetzt ist, eine stabile Festlegung des Bootskörpers 8 zu schaffen. Im Heckbereich ist der Bootskörper 8 gegen den Wohnwagen 1 mittels Seilen abgespannt. In Kombination mit dem erfindungsgemäßen Klappcaravan ergibt sich zudem eine sehr geringe Gesamthöhe des Fahrzeugs.

Der Innenraum des Bootskörpers 8 dient zudem als zusätzlicher Stauraum für Zubehör des Bootes wie z. B. Segel, etc. oder auch für zusätzliches Gepäck. Im Bedarfsfalle kann die Abspannung 82 für den Bootskörper 8 gelöst und der Bootskörper 8 um die Verankerung 31 im Heckbereich derart hochgeklappt werden, daß ein Zugriff möglich ist.

Die Erfindung läßt neben den hier aufgezeigten Ausführungsbeispielen weitere Gestaltungsansätze zu.

So läßt sich die Erfindung auch an einem Reisemobil verwirklichen. Hierzu könnte die Drehachse 4 dann entweder im Bereich oberhalb des Führerhauses angeordnet werden oder am Heck des Fahrzeugs. Die weitere Gestaltung des Fahrzeugs würde dann entsprechend angepaßt werden.

Die Drehachse kann auch bei einem Wohnwagen 1 im oberen Bereich und/oder im Heckbereich angeordnet werden.

Ferner ist es nicht zwingend erforderlich, daß das Oberteil 3 den Basisaufbau 2 seitlich, sowie vorne und hinten übergreift.

Die der Drehachse 4 gegenüberliegende Wand des Basisaufbaus 2 und die entsprechende Wand des Oberteils 3 müssen nicht gleichzeitig Radien zur Drehachse 4 bilden. Hier kann es auch gewünscht sein, daß beim Aufschwenken ein sich zunehmend vergrößernder Spalt im Heckbereich bildet. Ferner können auch anstelle der in den Fig. 1 bis 3 dargestellten drei Schwenkstellungen des Oberteils 3 verschiedene andere Schwenkstellungen realisiert werden. In einer einfachen Bauweise kann auch ein Verschwenken nur in zwei Stellungen vorgesehen sein.

Die Führungseinrichtungen zum Führen der Bewegung des Oberteils 3 gegenüber dem Basisaufbau 2 können auch am Oberteil 3 angeordnet werden. Zudem können die Führungseinrichtungen auch an mehreren Stellen in den Seitenwänden vorliegen. Ferner müssen die Führungseinrichtungen nicht in einem gemeinsamen Gehäuse im Eckbereich zusammengefaßt sein. Als Führungselemente kommen auch Kugeln oder Gleitsteine in Frage, welche ebenfalls federnd gelagert sein können. Zusätzlich ist es möglich, die Federkraft für die Führungselemente einstellbar zu gestalten, um eine definierte Schwenkkraft herzustellen.

Anstelle des Moskitonetzes 5 kann auch ein anderes Netz oder eine Stoffbespannung und ähnliches treten.

Die Bürstendichtung 6 kann auch am Oberteil 3 festgelegt sein. Ebenso kann auch die Schlauchdichtung 7 alternativ am Basisaufbau 2 vorgesehen sein. Ferner ist es auch möglich, die Schlauchdichtung 7 in eine an der Unterkante des Oberteils 3 zusätzlich angebrachten Profilleiste einzufügen.

Die Befestigung des Luftschlauches kann zudem auch mittels elastischer Bänder oder nur durch Einldebung in der Profilleiste erfolgen.

Weiter kann das Moskitonetz auch am Basisaufbau 2 und am Oberteil 3 eingeknöpft sein.

Die Erfindung schafft somit ein Straßenfahrzeug 1, insbesondere einen Wohnwagen, bei dem das Oberteil 3 gegenüber dem Basisaufbau 2 um eine Drehachse 4 schwenkbar angeordnet ist. Dadurch läßt sich in zusammengeklapptem Zustand eine Transportstellung verwirklichen, welche sich durch eine außerordentlich geringe Bauhöhe auszeichnet. Das Straßenfahrzeug 1 ist daher weniger anfällig für einen Seitenwinddruck und bietet zudem einen geringeren Widerstand gegenüber dem Fahrtwind, wodurch auch der Kraftstoffverbrauch reduziert ist. Durch Aufklappen des Oberteils 3 gegenüber dem Basisaufbau 2 können weitere Stellungen hergestellt werden, welche eine angenehme Nutzung des Innenraums des Straßenfahrzeugs 1 ermöglichen. Insbesondere läßt sich dadurch ein außerordentlich großer Innenraum herstellen.

## Patentansprüche

1. Straßenfahrzeug (1), insbesondere Wohnwagen, mit einem Basisaufbau (2) und einem dazu relativ beweglichen Oberteil (3),
dadurch gekennzeichnet,
daß das Oberteil (3) schwenkbar mit dem Basisaufbau (2) verbunden ist.

2. Straßenfahrzeug nach Anspruch 1, dadurch gekennzeichnet, daß das Oberteil (3) um eine Drehachse (4) schwenkbar ist, die in Fahrtrichtung vorne am Fahrzeug (1) vorliegt.

3. Straßenfahrzeug nach Anspruch 1 oder 2, dadurch gekennzeichnet, daß die Drehachse (4) im unteren Bereich des Basisaufbaus (2) ausgebildet ist.

4. Straßenfahrzeug nach einem der Ansprüche 1 bis 3, dadurch gekennzeichnet, daß das Oberteil (3) den Basisaufbau (2) im wesentlichen über die gesamte Länge des Fahrzeugs (1) übergreift.

5. Straßenfahrzeug nach einem der Ansprüche 1 bis 4, dadurch gekennzeichnet, daß das Oberteil (3) Seiten- und/oder Stirnflächen des Basisaufbaus (2) wenigstens teilweise übergreift.

6. Straßenfahrzeug nach einem der Ansprüche 1 bis 5, dadurch gekennzeichnet, daß das Oberteil (3) im eingeschwenkten Zustand wenigstens ein zu öffnendes Teil, wie zum Beispiel eine Tür (21), ein Fenster, eine Klappe, etc. übergreift.

7. Straßenfahrzeug nach einem der Ansprüche 1 bis 6, dadurch gekennzeichnet, daß eine Eingangstür (21) des Straßenfahrzeugs (1) zweiteilig ausgebildet ist, wobei der untere Teil der Eingangstür (21) auch im eingeschwenkten Zustand geöffnet werden kann.

8. Straßenfahrzeug nach einem der Ansprüche 1 bis 7, dadurch gekennzeichnet, daß Einrichtungselemente, insbesondere ein Bett (22), im aufgeschwenkten Zustand des Oberteils (3) verlängerbar, insbesondere teleskopier- oder aufklappbar gestaltet sind.

9. Straßenfahrzeug nach einem der Ansprüche 1 bis 8, dadurch gekennzeichnet, daß im Inneren des Fahrzeugs (1) im aufgeschwenkten Zustand wenigstens in Teilbereichen normale Stehhöhe vorliegt.

10. Straßenfahrzeug nach einem der Ansprüche 1 bis 9, dadurch gekennzeichnet, daß die der Drehachse (4) gegenüberliegende Wand des Basisaufbaus (2) und die der Drehachse (4) gegenüberliegende Wand des Oberteils (3) Radien zur Drehachse (4) bilden.

11. Straßenfahrzeug nach einem der Ansprüche 1 bis 10, dadurch gekennzeichnet, daß vorzugsweise am Basisaufbau (2) befestigte Führungseinrichtungen zum Führen der Bewegung des Oberteils (3) um die Drehachse (4) vorgesehen sind.

12. Straßenfahrzeug nach Anspruch 11, dadurch gekennzeichnet, daß die Führungseinrichtungen als Führungselemente Rollen, Kugeln oder Gleitsteine aufweisen.

13. Straßenfahrzeug nach einem der Ansprüche 1 bis 12, dadurch gekennzeichnet, daß die Führungseinrichtungen federnd gelagert sind.

14. Straßenfahrzeug nach Anspruch 13, dadurch gekennzeichnet, daß die gefederte Lagerung der Führungseinrichtungen in ihrer Federkraft einstellbar ist.

15. Straßenfahrzeug nach einem der Ansprüche 1 bis 14, dadurch gekennzeichnet, daß die Führungselemente der Führungseinrichtungen an den Ecken der Seitenwände in einem gemeinsamen Gehäuse zusammengefaßt sind, wobei die Längsachsen der Führungselemente dann vorzugsweise einen Winkel bilden, der 90° oder größer als 90° ist.

16. Straßenfahrzeug nach einem der Ansprüche 1 bis 15, dadurch gekennzeichnet, daß das Oberteil (3) und/oder der Basisaufbau (2) aus einem starren Material, insbesondere einem faserverstärkten Kunststoff ausgebildet ist.

17. Straßenfahrzeug nach einem der Ansprüche 1 bis 16, dadurch gekennzeichnet, daß das Oberteil (3) und/oder der Basisaufbau (2) in Sandwich-Bauweise mit einer innenliegenden Isolierung ausgebildet ist.

18. Straßenfahrzeug nach einem der Ansprüche 1 bis 17, dadurch gekennzeichnet, daß das Oberteil (3) und der Basisaufbau (2) gegeneinander mittels einer Bürstendichtung (6) abgedichtet sind, welche vorzugsweise am Basisaufbau (2) befestigt ist.

19. Straßenfahrzeug nach einem der Ansprüche 1 bis 18, dadurch gekennzeichnet, daß das Oberteil (3) und der Basisaufbau (2) gegeneinander mittels eines aufpumpbaren, umlaufenden Luftschlauches (71) abgedichtet sind.

20. Straßenfahrzeug nach Anspruch 19, dadurch gekennzeichnet, daß der Luftschlauch (71) in einer an der umlaufenden Oberkante des Basisaufbaus (2) oder an der umlaufenden Unterkante des Oberteils (3) angebrachten Profilleiste eingefügt ist, welche so geöffnet ist, daß bei einem Aufpumpen des Luftschlauches (71) dessen Wulst im wesentlichen im rechten Winkel zu den Seitenwänden bzw. der der Drehachse (4) gegenüberliegenden Wand austritt.

21. Straßenfahrzeug nach Anspruch 19 oder 20, dadurch gekennzeichnet, daß der Luftschlauch (71) mittels elastischer Bänder am Basisaufbau (2) bzw. am Oberteil (3) festgelegt ist.

22. Straßenfahrzeug nach Anspruch 19 oder 20, dadurch gekennzeichnet, daß der Luftschlauch (71) in der Profilleiste umlaufend oder punktuell eingeklebt ist.

23. Straßenfahrzeug nach einem der Ansprüche 19 bis 22, dadurch gekennzeichnet, daß der Luftschlauch (71) an der der Austrittsöffnung gegenüberliegenden Seite ein Profil aufweist, das punktuell oder umlaufend in eine in der Profilleiste befindliche Nut einklemmbar ist.

24. Straßenfahrzeug nach einem der Ansprüche 1 bis 23, dadurch gekennzeichnet, daß das Oberteil (3) in mehreren Öffnungsstellungen, vorzugsweise drei, gegenüber dem Basisaufbau (2) arretierbar ist.

25. Straßenfahrzeug nach einem der Ansprüche 1 bis 24, dadurch gekennzeichnet, daß das Oberteil (3) über die obere Abschlußkante des Basisaufbaus (2) hinausgeschwenkt werden kann.

26. Straßenfahrzeug nach Anspruch 25, dadurch gekennzeichnet, daß ein Moskitonetz (5) zum Schließen der beim Ausschwenken des Oberteils (3) über die obere Abschlußkante des Basisaufbaus (2) hinaus entstehenden Öffnung vorgesehen ist.

27. Straßenfahrzeug nach Anspruch 26, dadurch gekennzeichnet, daß das Moskitonetz (5) zwischen dem Basisaufbau (2) und dem Oberteil (3) eingeknöpft ist.

28. Straßenfahrzeug nach Anspruch 26 oder 27, dadurch gekennzeichnet, daß das Moskitonetz (5) in eine umlaufende Kederleiste (52) am Basisaufbau (2) und/oder eine umlaufende Kederleiste (51) am Oberteil (3) einfügbar ist.

29. Straßenfahrzeug nach einem der Ansprüche 26 bis 28, dadurch gekennzeichnet, daß das Moskitonetz (5) einstückig ist und in etwa in der Mitte zwischen den Befestigungspunkten am Basisaufbau (2) und Oberteil (3) ein Gummiband (53) angefügt ist, welches das Moskitonetz (5) derart elastisch vorspannt, daß es im abgesenkten Zustand nach innen gezogen ist.

30. Straßenfahrzeug nach einem der Ansprüche 1 bis 29, dadurch gekennzeichnet, daß auf einer Oberseite des Oberteils (3) ein Dachaufbau in Form eines kieloben auf dem Fahrzeugdach angeordneten Bootskörpers (8) mit Ruderdollen und/oder einer Segelmasthalrerung und/oder einem Außenbordmotorspiegel vorgesehen ist.
